# EUROPÄISCHE PATENTANMELDUNG

(11) **EP 4 574 916 A1**
(43) Veröffentlichungstag der Anmeldung: **25.06.2025**
(21) Anmeldenummer: 24221899.8
(22) Anmeldetag: 19.12.2024
(51) Int. Cl.: C09J 133/06

(54) **HAFTKLEBMASSE**

(30) Priorität: 20.12.2023 DE 102023136017
(71) Anmelder: TESA SE, 22848 Norderstedt (DE)
(72) Erfinder: TASCHE, Jos, 22848 Norderstedt (DE); ELLRINGMANN, Kai, 22848 Norderstedt (DE); RELLMANN-SPRINK, André, 22848 Norderstedt (DE)
(74) Vertreter: tesa SE

(57) **Zusammenfassung**

Es sollte eine Haftklebmasse zur Verfügung gestellt werden, die gute Klebkräfte, insbesondere auf polaren Haftuntergründen, sowie gute Scherfestigkeit, insbesondere bei Raumtemperatur und erhöhten Temperaturen, und gut Schälhaftung aufweist und sich zu einem hohen Anteil aus biobasierten Rohstoffen herstellen lässt. Dies gelingt mit einer Haftklebmasse umfassend
- mindestens ein Copolymer A, das auf eine Monomerenzusammensetzung umfassend
a) ein oder mehrere Monomere ausgewählt aus der Gruppe bestehend aus i-Amylacrylat, n-Heptylacrylat, und 2-Octylacrylat zu insgesamt 45 bis 85 Gew.-%;
b) ein oder mehrere Alkyl(meth)acrylate, deren Alkoholkomponente 1 bis 4 C-Atome aufweist, zu insgesamt 24 bis 50 Gew.-% und
c) 0,5 bis 10 Gew.-% Acrylsäure;
zurückgeführt werden kann;
- mindestens ein Kolophoniumharz KH mit einer Erweichungstemperatur im Bereich von 80 bis 150 °C;
- mindestens einen koordinativen Vernetzer und
- mindestens einen kovalenten Vernetzer.

Gegenstand der Erfindung sind ferner ein Klebeband, das ein Trägermaterial und zumindest an einer seiner beiden Außenseiten eine erfindungsgemäße Haftklebmasse umfasst sowie die Verwendung einer erfindungsgemäßen Haftklebmasse oder eines erfindungsgemäßen Klebebandes zur Herstellung von Verklebungen in elektronischen, optischen und/oder feinmechanischen Geräten.

## Beschreibung

Die Erfindung betrifft das technische Gebiet der Haftklebmassen, wie sie vielfach zum temporären oder dauerhaften Verbinden von Fügeteilen eingesetzt werden. Spezifischer schlägt die Erfindung eine Haftklebmasse auf Basis eines speziell zusammengesetzten Polyacrylat-Copolymers vor, das gute Klebkräfte mit guten Scherstandzeiten und Schälhaftungen insbesondere auf polaren Klebuntergründen ermöglicht, wobei ein hoher Anteil des Polyacrylat-Copolymers auf nachwachsenden Rohstoffen basiert.

Die Ansprüche an die Qualität von Haftklebmassen sind in den letzten Jahren dramatisch angestiegen. Ein Beispiel dafür ist die Verwendung von Haftklebmassen in Elektronikprodukten wie z.B. Smartphones und Tabletcomputern. Die Klebmassen sollen hier ausgeprägte klebtechnische Eigenschaften, z.B. eine hohe Schockresistenz, aufweisen, müssen aber auch für die oft hochsensiblen elektronischen Bauteile verträglich sein. Zunehmend geraten auch ökologische und soziale Kriterien ins Blickfeld, was z.B. die Herkunft der Rohstoffe anbetrifft. Besonders nachgefragt sind in diesem Zusammenhang Rohstoffe, die zum Teil oder sogar zur Gänze aus biologischen Quellen stammen. Dies ist Bestandteil des derzeit allgemein zu beobachtenden Trends hin zu nachhaltigen Produkten und adressiert insbesondere die endlichen Erdölreserven und das daraus resultierende Erfordernis eines sparsamen Umgangs damit; entsprechende Produkte werden von den Kunden der Klebmassehersteller zunehmend aktiv eingefordert.

Poly(meth)acrylate haben sich unter den genannten Aspekten immer wieder als gut nutzbare Ausgangsstoffe erwiesen. Dementsprechend wird anhaltend an geeigneten Formulierungen für Poly(meth)acrylat-basierte Haftklebmassen gearbeitet.

Eine wässrige Haftklebzusammensetzung, die im Wesentlichen auf einem in Wasser dispergierten Acrylatpolymer basiert, ist z.B. in EP 2 062 955 A1 beschrieben.

Typisch für Acrylat-basierte Haftklebmassen auf pflanzlicher Rohstoffbasis sind Klebezusammensetzungen auf Basis eines Copolymers, welches das Reaktionsprodukt von 90 bis 99,5 Gew.-% 2-Octyl(meth)acrylat, 0,5 bis 10 Gew.-% (Meth)acrylsäure und weniger als 10 Gew.-% weiteren Monomeren umfasst, wie sie in WO 2008/046000 A1 beschrieben sind.

EP 3 013 767 A1 offenbart die Verwendung eines Polymers, das sich aus der Polymerisation von 2-Octylacrylat erneuerbaren Ursprungs und gegebenenfalls mindestens eines anderen Monomers ergibt, als Bindemittel für die Herstellung einer Beschichtungszusammensetzung, wobei das Polymer eine Glasübergangstemperatur von -30 °C bis 30 °C aufweist.

EP 2 626 397 A1 offenbart eine Haftklebmasse umfassend eine Polymerkomponente auf Acrylatbasis zum Gegenstand, wobei mindestens 50 Gew.-% der zur Herstellung der Polymerkomponente eingesetzten Monomere vollständig auf nachwachsende Rohstoffe zurückzuführen sind.

EP 4 196 509 A1 offenbart eine Haftklebmasse, die mindestens ein Copolymer, das auf eine Monomerenzusammensetzung, die 45 - 75 Gew.-% mindestens eines Monomers ausgewählt aus der Gruppe bestehend aus i-Amylacrylat, n-Heptylacrylat, und 2-Octylacrylat, 24 - 50 Gew.-% mindestens eines Alkyl(meth)acrylats, dessen Alkoholkomponente 1 bis 4 C-Atome aufweist, und 0,5 bis 10 Gew.-% Acrylsäure umfasst, zurückgeführt werden kann; und mindestens ein klebkraftverstärkendes Harz umfasst.

Aufgabe der Erfindung ist es, eine Haftklebmasse zur Verfügung zu stellen, die gute Klebkräfte, insbesondere auf polaren Haftuntergründen, gute Scherstandzeiten, insbesondere bei Raumtemperatur und erhöhten Temperaturen, und gute Schälhaftungen aufweist und sich zu einem hohen Anteil aus biobasierten Rohstoffen herstellen lässt.

Ein erster und allgemeiner Gegenstand der Erfindung, mit dem die Aufgabe gelöst wird, ist eine Haftklebmasse, die
- mindestens ein Copolymer A, das auf eine Monomerenzusammensetzung, die
   a) ein oder mehrere Monomere ausgewählt aus der Gruppe bestehend aus i-Amylacrylat, n-Heptylacrylat, und 2-Octylacrylat zu insgesamt 45 bis 85 Gew.-%,
   b) ein oder mehrere Alkyl(meth)acrylate, deren Alkoholkomponente 1 bis 4 C-Atome aufweist zu 24 - 50 Gew.-%, und
   c) 0,5 bis 10 Gew.-% Acrylsäure;
   umfasst, zurückgeführt werden kann;
- mindestens ein Kolophoniumharz KH mit einer Erweichungstemperatur im Bereich von 80 bis 150 °C;
- mindestens einen koordinativen Vernetzer und
- mindestens einen kovalenten Vernetzer.

Eine derartige Haftklebmasse weist die aufgabengemäßen guten Klebeigenschaften auf, wobei sich sowohl die (Co-)Polymerkomponente als auch der Harzanteil weitgehend auf Basis nachwachsender Rohstoffe formulieren lassen.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im Allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G`) und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' - (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" - (τ/γ) • sin(δ) (τ = Schubspannung, γ = Deformation, δ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von 10° bis 10¹ rad/sec sowohl G` als auch G" zumindest zum Teil im Bereich von 10³ bis 10⁷ Pa liegen. "Zum Teil" heißt, dass zumindest ein Abschnitt der G`-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Die erfindungsgemäße Haftklebmasse umfasst mindestens ein Copolymer A, das auf eine Monomerenzusammensetzung zurückgeführt werden kann, die
a) ein oder mehrere Monomere ausgewählt aus der Gruppe bestehend aus i-Amylacrylat, n-Heptylacrylat, und 2-Octylacrylat zu insgesamt 45 bis 85 Gew.-%;
b) ein oder mehrere Alkyl(meth)acrylate, deren Alkoholkomponente 1 bis 4 C-Atome aufweist, zu insgesamt 24 bis 50 Gew.-% und
c) 0,5 bis 10 Gew.-% Acrylsäure;
umfasst.

Insbesondere können die unter a) aufgeführten Monomere sämtlich aus nachwachsenden Rohstoffen hergestellt werden.

Ein Verfahren zur Herstellung von biobasierter Acrylsäure, die als Monomer c) und als Säurekomponente für die Monomere a) und b) eingesetzt werden kann, geht von Glycerin aus, das beispielsweise in großen Mengen bei der Umesterung von Pflanzenölen mit Methanol zur Herstellung von Biodiesel anfällt und daher zur Verfügung steht. Das Verfahren umfasst eine Dehydratisierung des Glycerins zu Acrolein; anschließend erfolgt - in einem ein- oder zweistufigen Prozess - eine Oxidation des Acroleins zur Acrylsäure. Ein derartiges Verfahren ist beispielsweise in US 2007/0129570 A1 beschrieben.

WO 2006/092272 A2 offenbart ein ähnliches Verfahren, bei dem zunächst Glycerin zu einem Acrolein aufweisenden Dehydratisierungsprodukt umgewandelt wird und dann eine Gasphasenoxidation dieses Dehydratisierungsproduktes vorgenommen wird, wobei ein acrylsäurehaltiges Produkt erzeugt wird. Durch Kontakt des Oxidationsproduktes mit einem Quenchmittel und Aufbereitung der Quenchphase erhält man Acrylsäure. Dieses Verfahren ermöglicht die Herstellung von Acrylsäure aus nachwachsenden Rohstoffen ohne den Einsatz reaktiver Verbindungen. Das Glycerin erhält man bevorzugt aus der Verseifung von tierischen oder pflanzlichen Fetten.

Biobasierte Acrylsäure lässt sich auch durch ein Verfahren erhalten, bei dem Milchsäure (2-Hydroxypropionsäure) oder 3-Hydroxypropionsäure aus biologischem Material als Fluid - insbesondere in wässriger Phase - erzeugt wird, die Hydroxypropionsäure unter Erhalt eines Acrylsäure beinhaltenden Fluids dehydratisiert wird und das die Acrylsäure beinhaltende Fluid aufgereinigt wird. Die benötigte Hydroxypropionsäure kann durch Fermentation hergestellt werden. Fermentative Umsetzungen verlaufen häufig hochselektiv, mit hohen Ausbeuten und nahezu nebenproduktfrei aufgrund der hohen Selektivität der eingesetzten Mikroorganismen. Nebenreaktionen werden außerdem auch dadurch vermieden, dass die Fermentationsprozesse bei geringen Temperaturen von 30 - 60 °C durchgeführt werden. Großtechnische chemische Prozesse der Petrochemie werden dagegen oftmals zur Optimierung der Ausbeuten bei sehr viel höheren Temperaturen von meist > 200 °C durchgeführt. Hohe Reaktionstemperaturen führen aber immer zu Nebenreaktionen und zur Bildung von Crackprodukten.

Das gerade beschriebene Verfahren ist beispielweise in DE 10 2006 039 203 A1 beschrieben, wobei die Aufreinigung des Acrylsäure beinhaltenden Fluids durch eine Suspensionskristallisation oder eine Schichtkristallisation durchgeführt wird.

Auch zur Herstellung der Alkohole aus nachwachsenden Rohstoffen stehen unterschiedliche Verfahren zur Verfügung.

So ist Butanol durch Fermentation von pflanzlicher, meist zuvor aufbereiteter Biomasse erhältlich. Man geht dabei beispielweise von Saccharose, Stärke oder Cellulose aus, zum Teil werden gentechnisch modifizierte Mikroorganismen eingesetzt (so genannte "Weiße Biotechnologie"). Im so genannten A.B.E.-Prozess (A.B.E. für Aceton, Butanol, Ethanol) setzt man zur Fermentation für die Produktion von 1-Butanol das Bakterium Clostridium acetobutylicum ein.

2-Octanol lässt sich als Nebenprodukt bei der Oxidation von Rizinussäure zu Sebacinsäure gewinnen und isolieren. n-Heptanol lässt sich aus Heptanal gewinnen, das bei der thermischen Spaltung von Rizinussäure (pyrolytische Zersetzung zu Heptanal und Undecensäure) anfällt.

Die Monomere a) setzen die Glasübergangstemperatur des Copolymers A im Vergleich zu den weiteren enthaltenen Monomeren herab. Dies ist vorteilhaft, weil es das Aufziehen der Haftklebmasse auf den Klebuntergrund begünstigt. Zudem kann die Masse dadurch mehr Harz aufnehmen, was sich ebenfalls positiv auf die Klebleistung auswirkt.

Die Monomerenzusammensetzung des Copolymers A der erfindungsgemäßen Haftklebmasse umfasst Monomere a) erfindungsgemäß zu insgesamt 45 bis 85 Gew.-%. Bevorzugt umfasst die Monomerenzusammensetzung des Copolymers A der erfindungsgemäßen Haftklebmasse Monomere a) zu insgesamt 55 bis 75 Gew.-%, insbesondere zu insgesamt 60 bis 70 Gew.-%. Die Monomerenzusammensetzung kann grundsätzlich ein (einziges) oder mehrere Monomere a) umfassen.

Bevorzugt umfasst die Monomerenzusammensetzung des Copolymers A der erfindungsgemäßen Haftklebmasse als Monomer a) mindestens 2-Octylacrylat. Dies ist besonders vorteilhaft, weil dieses Monomer die Glasübergangstemperatur des Copolymers A nochmals stärker herabsetzt. Zudem bringt es keine Seitenkettenkristallinität ein und trägt somit besonders stark zur Ausprägung haftkleberiger Eigenschaften bei. Insbesondere umfasst die Monomerenzusammensetzung des Copolymers A als Monomer a) 2-Octylacrylat. Dies bedeutet, dass ausschließlich 2-Octylacrylat als Monomer a) umfasst ist.

Die Monomerenzusammensetzung des Copolymers A der erfindungsgemäßen Haftklebmasse umfasst erfindungsgemäß ferner ein oder mehrere Alkyl(meth)acrylate, deren Alkoholkomponente 1 bis 4 C-Atome, [Monomere b)] aufweist. Die Monomerenzusammensetzung des Copolymers A der erfindungsgemäßen Haftklebmasse umfasst ein oder mehrere Monomere b) also zu insgesamt 24 bis 50 Gew.-%. Bevorzugt umfasst die Monomerenzusammensetzung des Copolymers A der erfindungsgemäßen Haftklebmasse ein oder mehrere Monomere b) zu insgesamt 25 bis 40 Gew.-%, insbesondere zu insgesamt 27 bis 37 Gew.-%. Die Monomerenzusammensetzung kann grundsätzlich ein (einziges) oder mehrere Monomere b) umfassen.

Bevorzugt ist das eine oder die mehreren Alkyl(meth)acrylate, deren Alkoholkomponente 1 bis 4 C-Atome aufweist, ausgewählt aus der Gruppe bestehend aus Methylacrylat, Ethylacrylat, n-Butylmethacrylat und i-Butylacrylat. Besonders bevorzugt umfasst die Monomerenzusammensetzung des erfindungsgemäßen Copolymers A als Monomere b) i-Butylacrylat und Methylacrylat.

Die Monomere b) bewirken - insbesondere im Vergleich zu den Monomeren a) - eine Erhöhung der Glasübergangstemperatur des Copolymers A. Dies ist vorteilhaft, weil sich so über eine Verschiebung der Gewichtsanteile der Monomere a) und b) die Eigenschaften der Haftklebmasse auf die jeweiligen Anforderungen abstimmen lassen. Darüber hinaus wird vermutet, dass sie Verschlaufungen in das Copolymer einbringen. Dies ist vorteilhaft, weil der Haftklebmasse dadurch größere Zähigkeit und Kohäsion verliehen werden.

Die Monomerenzusammensetzung des Copolymers A der erfindungsgemäßen Haftklebmasse umfasst Acrylsäure zu 0,5 bis 10 Gew.-%, bevorzugt zu 1 bis 7 Gew.-%, insbesondere zu 2 bis 4 Gew.-%.

Bevorzugt besteht die Monomerenzusammensetzung des Copolymers A der erfindungsgemäßen Haftklebmasse aus
a) ein oder mehreren Monomeren ausgewählt aus der Gruppe bestehend aus i-Amylacrylat, n-Heptylacrylat, und 2-Octylacrylat zu insgesamt 60 bis 75 Gew.-%,
b) ein oder mehrere Alkyl(meth)acrylate, deren Alkoholkomponente 1 bis 4 C-Atome aufweist, zu insgesamt 27 bis 37 Gew.-% und
c) 1 bis 4 Gew.-% Acrylsäure;
bzw. aus den vorstehend als bevorzugt beschriebenen Monomeren in den dort angegebenen Anteilen.

Die Herstellung der Copolymere A geschieht bevorzugt durch konventionelle radikalische Polymerisationen oder kontrollierte radikalische Polymerisationen. Die Copolymere A können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Copolymere A durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont).

Bevorzugte Lösungsmittel für die Herstellung der Copolymere A sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Das Copolymer A der erfindungsgemäßen Haftklebmasse weist bevorzugt ein gewichtsmittleres Molekulargewicht M_{w} von mehr als 750.000 g/mol auf. Die Polydispersität (M_{w}/Mₙ) des Copolymers beträgt bevorzugt 130 bis 170.

Die erfindungsgemäße Haftklebmasse kann grundsätzlich ein (einziges) oder mehrere Copolymere A der vorstehend beschriebenen Art umfassen, bevorzugt umfasst sie genau ein derartiges Copolymer A.

Bevorzugt umfasst die erfindungsgemäße Haftklebmasse Copolymere A wie vorstehend beschrieben zu insgesamt 50 bis 90 Gew.-%, stärker bevorzugt zu insgesamt 55 bis 85 Gew.-%, insbesondere zu insgesamt 60 bis 80 Gew.-%, ganz besonders bevorzugt zu insgesamt 65 bis 75 Gew.-%, jeweils bezogen auf das Gesamtgewicht der Haftklebmasse. Besonders bevorzugt umfasst die erfindungsgemäße Haftklebmasse (genau) ein Copolymer A wie vorstehend beschrieben zu 50 bis 90 Gew.-%, stärker bevorzugt zu 55 bis 85 Gew.-%, insbesondere zu 60 bis 80 Gew.-%, ganz besonders bevorzugt zu 65 bis 75 Gew.-%, jeweils bezogen auf das Gesamtgewicht der Haftklebmasse.

Das Copolymer A oder die Copolymere A der erfindungsgemäßen Haftklebmasse sind bevorzugt chemisch vernetzt, insbesondere thermisch vernetzt. "Thermisch vernetzt" bezeichnet dabei eine Vernetzung mittels Substanzen, die unter dem Einfluss thermischer Energie eine Vernetzungsreaktion ermöglichen (initiieren) und/oder fördern. Bevorzugte thermische Vernetzer sind kovalent reagierende Vernetzer, insbesondere Epoxide, Isocyanate und/oder Aziridine, und koordinative Vernetzer, besonders bevorzugt Metallchelate, insbesondere Aluminium-, Titan-, Zirconium-, Zink- und/oder Eisenchelate. Es können auch Kombinationen verschiedener Vernetzer, z.B. eine Kombination von einem oder mehreren Epoxiden mit einem oder mehreren Metallchelaten, eingesetzt werden.

Die erfindungsgemäße Haftklebemasse umfasst mindestens einen koordinativen und mindestens einen kovalenten Vernetzer.

Als kovalente Vernetzer für die vorliegende Erfindung werden in einer bevorzugten Ausführung der Erfindung Glycidylamine eingesetzt. Als erfindungsgemäß besonders bevorzugte Vertreter seien exemplarisch N,N,N',N'-Tetrakis(2,3-epoxypropyl)cyclohexane-1,3-dimethylamine und N,N,N',N'-tetrakis(2,3-epoxypropyl)-m-xylen-a,a'-diamin genannt.

Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propanediol oder (3,4 Epoxycyclohexan)methyl-3,4-epoxycyclohexylcarboxylat seinen hier exemplarisch genannt.

Weiterhin können erfindungsgemäß multifunktionelle Azeridine eingesetzt. Hierzu sei beispielsweise Trimethylolpropane tris(2-methyl-1-aziridinepropionate) genannt.

Als kovalente Vernetzer werden in einer weiteren bevorzugten Ausführung der Erfindung Isocyanate eingesetzt, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat eingesetzt werden. Sie können allein oder in einer Kombination von zwei oder mehr Arten davon verwendet werden.

Es wird erfindungsgemäß mindestens ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer für die vorliegende Erfindung kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Fe(III), Zn(II), Zr(IV) und Ti(IV) bevorzugt, besonders bevorzugt sind Fe(III) und Al(III).

Als Liganden der koordinativen Vernetzer können grundsätzlich alle bekannten Liganden diesen. Die für die koordinative Bindung der organischen Verbindung genutzten Atome können aber insbesondere solche Atome sein, die feie Elektronenpaare aufweisen, wie beispielweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Eisen(III)-acetylacetonat (Fe-Chelat), Titanchelatverbindungen wie Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylaceto-acetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat (Al-Chelat) und Aluminiumdipropoxid bevorzugt. Sie können allein oder in einer Kombination von zwei oder mehr Arten davon verwendet werden.

Kovalente Vernetzer werden bevorzugt in einer Gesamtmenge von 0,02 bis 0,04 Gewichtsteile, bevorzugt 0,025 bis 0,035 Gewichtsteile, bezogen auf 100 Gewichtsteile der Gesamtheit der Copolymere A eingesetzt.

Koordinative Vernetzer werden bevorzugt in einer Menge von 0,10 bis 0,30 Gewichtsteile, bevorzugt 0,12 bis 0,23 Gewichtsteile, besonders bevorzugt 0,13 bis 0,17 Gewichtsteile bezogen auf 100 Gewichtsteile der Gesamtheit der Copolymere A eingesetzt.

Weiter vorzugsweise werden kovalente Vernetzer und koordinative Vernetzer derart eingesetzt, dass die koordinativen Vernetzer im molaren Überschuss, bezogen auf die kovalenten Vernetzer, vorliegen. Bevorzugt werden die Vernetzer derart eingesetzt, dass das molare Verhältnis von koordinativen Vernetzern zu kovalenten Vernetzern (n_{koord}/nₖₒᵥ) größer als 4,5 (4,5 < n_{koord}/nₖₒᵥ), bevorzugt größer als 5,0 (5,0 < n_{koord}/nₖₒᵥ) und besonders bevorzugt größer als 5,5 (5,5 < n_{koord}/nₖₒᵥ) ist.

Bevorzugt werden die Vernetzer in den vorstehend genannten Mengen Bereichen eingesetzt, und zwar derart, dass das molare Verhältnis von kovalenten Vernetzern zu koordinativen Vernetzern (n_{koord}/nₖₒᵥ) größer als 4,5 (4,5 < n_{koord}/nₖₒᵥ), bevorzugt größer als 5,0 (5,0 < n_{koord}/nₖₒᵥ) und besonders bevorzugt größer als 5,5 (5,5 < n_{koord}/nₖₒᵥ) ist.

Unter klebkraftverstärkendes Harz wird entsprechend dem allgemeinem Fachmannverständnis ein oligomeres oder polymeres Harz verstanden, das die Autohäsion (den Tack, die Eigenklebrigkeit) der Haftklebmasse im Vergleich zu der kein klebkraftverstärkendes Harz enthaltenden, ansonsten aber identischen Haftklebmasse erhöht. Klebkraftverstärkende Harze können darüber hinaus vorteilhaft auch die Benetzungseigenschaften der Haftklebmasse gegenüber dem zu verklebenden Substrat, ihr Aufließverhalten und/oder ihre Adhäsion verbessern.

Ein klebkraftverstärkendes Harz kann grundsätzlich jedes mit der Haftklebmasse und insbesondere mit dem Copolymer A bzw. den Copolymeren Ader Haftklebmasse kompatibles Klebharz sein.

Die erfindungsgemäße Haftklebmasse umfasst mindestens ein Kolophomiumharz KH mit einer Erweichungstemperatur im Bereich von 80 - 150 °C als klebkraftverstärkendes Harz.

Unter Kolophoniumharzen wird eine Gruppe an Harzen verstanden, welche deren disproportionierten, hydrierten, polymerisierten, modifizierte Derivate, und Salze enthalten.

Modifizierte Derivate des Kolophoniumharz umfassen veresterte Derivate und/oder weiter substituierte Derivate wie beispielsweise Maleinatharz (CAS: 68038-41-5).

Kolophoniumharze sind vorteilhaft einsetzbar, weil sie zu großen Teilen, insbesondere zur Gänze, aus nachwachsenden Rohstoffen hergestellt bzw. gewonnen werden können. Diese Klebharze sind aus nachwachsenden Rohstoffen herstellbar und haben sich als besonders geeignet erwiesen, die klebtechnischen Eigenschaften der erfindungsgemäßen Haftklebmasse in besonderem Maße zu verbessern.

Ganz besonders bevorzugt ist das klebkraftverstärkende Harz ein vollhydriertes Kolophoniumharz. Dies ist besonders vorteilhaft, weil diese Harze eine vergleichsweise geringe Erweichungstemperatur aufweisen und somit vorteilhaft zur Ausprägung haftklebriger Eigenschaften beitragen. Überdies weisen sie eine besonders gute Alterungsstabilität auf.

Die erfindungsgemäße Haftklebmasse kann grundsätzlich ein (einziges) oder mehrere Kolophoniumharze KH umfassen.

Die erfindungsgemäße Haftklebmasse kann grundsätzlich ein (einziges) oder mehrere klebkraftverstärkende Harze umfassen.

Weitere klebkraftverstärkende Harze sind beispielsweise aliphatische, aromatische und alkylaromatische Kohlenwasserstoffharze; Kohlenwasserstoffharze auf Basis reiner Monomere; hydrierte Kohlenwasserstoffharze; funktionelle Kohlenwasserstoffharze und ggf. derivatisierte Naturharze; bevorzugt ist das Klebharz ausgewählt aus der Gruppe bestehend aus Pinen-, Inden- und Kolophoniumharzen, deren disproportionierten, hydrierten, polymerisierten, veresterten Derivaten und Salzen; aliphatischen und aromatischen Kohlenwasserstoffharzen; Terpenharzen und Terpenphenolharzen sowie C₅-, C₉- und anderen Kohlenwasserstoffharzen.

Bevorzugt umfasst die erfindungsgemäße Haftklebmasse klebkraftverstärkende Harze zu insgesamt 10 bis 55 Gew.-%, stärker bevorzugt zu insgesamt 15 bis 50 Gew.-%, insbesondere zu insgesamt 20 bis 40 Gew.-%, ganz besonders bevorzugt zu insgesamt 25 bis 35 Gew.-%, jeweils bezogen auf das Gesamtgewicht der Haftklebmasse.

Besonders bevorzugt umfasst die erfindungsgemäße Haftklebmasse mindestens ein Kolophoniumharz KH zu insgesamt 10 bis 55 Gew.-%, stärker bevorzugt zu insgesamt 15 bis 50 Gew.-%, insbesondere zu insgesamt 20 bis 40 Gew.-%, ganz besonders bevorzugt zu insgesamt 25 bis 35 Gew.-%, jeweils bezogen auf das Gesamtgewicht der Haftklebmasse.

Das erfindungsgemäße Kolophoniumharz KH weist eine Erweichungstemperatur von 80 - 150 °C auf, bevorzugt 85 - 130 °C, ganz besonders bevorzugt zu 90 - 110 °C.

Das erfindungsgemäße Kolophoniumharz KH weist eine Erweichungstemperatur von 80 - 150 °C auf, bevorzugt 85 - 130 °C, ganz besonders bevorzugt zu 90 - 110 °C, wobei die Erweichungstemperatur über das Ring-Kugel-Verfahren ("Ring & Ball") gemäß ASTM E28-18 (Norm herausgegeben am 01. Juli 2018) bestimmt wird.

Die erfindungsgemäße Haftklebmasse kann darüber hinaus weitere Komponenten umfassen, z.B. Weichmacher (Plastifizierungsmittel); Füllstoffe, insbesondere Fasern, Ruß, Zinkoxid, Titandioxid, Spinelle, Farbstoffe, Pigmente, Kreide, Voll- oder Hohlglaskugeln, Mikrokugeln aus anderen Materialien, z.B. polymere Mikrohohlkugeln, Kieselsäure und/oder Silikate; Keimbildner; Blähmittel; Compoundierungsmittel; Stabilisatoren und/oder Alterungsschutzmittel, z.B. primäre und/oder sekundäre Antioxidantien und/oder Lichtschutzmittel.

Die Herstellung der erfindungsgemäßen Haftklebmasse erfolgt bevorzugt aus Lösung, d.h. die Komponenten werden in einem geeigneten Lösemittel dispergiert bzw. gelöst und vermischt; das Lösemittel wird nach Abschluss des Mischvorgangs mittels üblicher Methoden entfernt.

Die erfindungsgemäße Haftklebmasse kann als solche verwendet werden, z.B. in Form eines Schichtkörpers bzw. einer trägerfreien Schicht der erfindungsgemäßen Haftklebmasse, die auch als "Transferklebeband" bezeichnet wird. Ein solches Transferklebeband ist bevorzugt lediglich auf ein Material aufgebracht, das vorübergehend zum Schutz der Klebeoberfläche, zur leichteren Handhabbarkeit und zur leichteren Applizierbarkeit der Haftklebmasse dient. Derartige Materialien werden auch als Releaseliner oder einfach als "Liner" bezeichnet und sind in der Regel leicht wieder entfernbar, insbesondere durch geeignete Oberflächenbeschichtungen. Auch die zweite Seite des Transferklebebandes kann mit einem Liner versehen sein.

Die Releaseliner sind insbesondere ein- oder bevorzugt beidseitig antiadhäsiv ausgerüstete (beschichtete oder behandelte) Trägermaterialien. Als Trägermaterial für Releaseliner kommen zum Beispiel diverse Papiere, optional auch in Kombination mit einer stabilisierenden Extrusionsbeschichung, in Frage. Weitere geeignete Liner-Trägermaterialien sind Folien, insbesondere Polyolefin-Folien, zum Beispiel auf Basis von Ethylen, Propylen, Butylen und/oder Hexylen. Bevorzugte Trägermaterialien sind Papiere, z.B. Glassine-Papiere. Papiere sind nicht zuletzt auch deshalb bevorzugt, weil sich das Konzept der Herkunft der Bestandteile aus nachwachsenden Rohstoffen so auch auf Hilfsmaterialien des Klebebandes ausdehnen lässt.

Als antiadhäsive Trennbeschichtung werden häufig Silikonsysteme eingesetzt. Zu den üblicherweise eingesetzten Linern gehören zum Beispiel silikonisierte Papiere und silikonisierte Folien.

Für die Verwendung des Transferklebebandes zur Verklebung auf einer Substratoberfläche wird der Liner bzw. werden die Liner dann entfernt, so dass die beiden klebenden Seiten jeweils direkten Kontakt zu den miteinander zu verklebenden Substratoberflächen erhalten. Der Liner stellt somit kein produktives Bauteil dar und wird entsprechend auch nicht zum Klebeband gerechnet, sondern stellt vielmehr lediglich ein Hilfsmittel zur Handhabung desselben dar.

Bevorzugt wird die erfindungsgemäße Haftklebmasse im Aufbau bzw. zur Herstellung mehrschichtiger Klebebänder verwendet. Entsprechende mehrschichtige Klebebänder umfassen üblicherweise zumindest eine Trägerschicht und können ein- oder beidseitig eine außenliegende Schicht einer erfindungsgemäßen Haftklebmasse aufweisen. Bei beidseitig klebend ausgerüsteten Klebebändern können entweder eine der außenliegenden Schichten oder auch beide außenliegenden Schichten erfindungsgemäße Haftklebmassen sein. Im letzteren Fall können die Haftklebmasseschichten hinsichtlich ihrer chemischen Zusammensetzung und/oder ihrer chemischen und/oder physikalischen Eigenschaften und/oder ihrer Geometrie (z.B. der Schichtdicke) unterschiedlich sein, besonders bevorzugt sind sie aber bezüglich ihrer chemischen Zusammensetzung und/oder ihrer chemischen und/oder physikalischen Eigenschaften identisch. Auch bei mehrschichtigen Klebebändern können eine oder auch beide außenliegenden Haftklebmasseschichten mit Linern abgedeckt sein.

Die Klebebänder können weitere Schichten aufweisen, z.B. weitere Trägerschichten, Funktionsschichten oder dergleichen.

Als Trägermaterialien des mehrschichtigen Klebebands werden bevorzugt biobasierte Materialien ausgewählt, zum Beispiel solche, die ausgewählt sind aus der Liste bestehend aus Papieren; biobasierten Geweben oder Vliesen, zum Beispiel aus Baumwolle oder Viskose; Cellophan; Celluloseacetat; biobasierten Polyethylenfolien (PE) und Polypropylenfolien (PP); Folien aus thermoplastischer Stärke; biobasierten Polyesterfolien, z.B. Folien aus Polylactid (PLA; Polymilchsäure), Polyethylenterephthalat (PET), Polyethylentetrahydrofuranoat (PEF) oder Polyhydroxyalkanoat (PHA). Besonders bevorzugt ist das Trägermaterial eine PET-Folie. PET-Folien sind beispielsweise deshalb bevorzugt, weil sie als recyceltes Material eingesetzt werden können und somit dem Nachhaltigkeitsgedanken auf diese Weise Rechnung tragen.

In einer Ausführungsform ist die Haftklebmasse dadurch gekennzeichnet, dass mindestens 50 Gew.-%, bevorzugt mindestens 60 Gew.-%, besonders bevorzugt mehr als 70 Gew.-% der zur Herstellung des Copolymerkomponente A eingesetzten Monomere vollständig auf nachwachsenden Rohstoffen basieren.

In einer Ausführungsform ist die Haftklebmasse dadurch gekennzeichnet, dass diese zu mindestens 50 Gew.-%, bevorzugt mindestens 60 Gew.-%, besonders bevorzugt mehr als 70 Gew.-% auf nachwachsenden Rohstoffen basiert.

Im Gegensatz zu Produkten auf petrochemischer Basis weisen solche, die zu einem erheblichen Anteil, bevorzugt vollständig, auf nachwachsende Rohstoffe zurückzuführen sind, einen natürlichen Anteil an radioaktiven Kohlenstoffatomen (¹⁴C-Isotope) auf. Der Anteil dieser Isotope kann bestimmt werden und gibt einen Rückschluss auf die Menge des eingesetzten natürlichen Rohstoffs. Der Anteil an nachwachsenden Rohstoffen wird dabei mittels der ¹⁴C-Radiocarbonmethode nach ASTM D6866-04 bestimmt. Die Methode beruht auf der Messung des Isotops ¹⁴C, das in der Natur (also in Biomassen) mit einer Häufigkeit von 10⁻¹⁰ % im Kohlenstoff vorkommt. Die Halbwertszeit von 5730 Jahren ist einerseits lang genug, als dass in den Verwendungszeiträumen üblicher Klebeprodukte, wie beispielweise Haftklebebändern, keine signifikante Änderung des ¹⁴C-Gehaltes durch Zerfall stattfindet (aber doch kurz genug, dass historische Gegenstände, die aus biologischer Materie hergestellt wurden, datiert werden können). Die Messung des Isotops ¹⁴C erfolgt mittels Flüssigszintillationsspektrometrie oder Massenspektrometrie. Aufgrund der o.g. Halbwertszeit sind in Kohlenstoffproben, die älter als 60.000 Jahre sind, im Rahmen der Nachweisgrenze keine ¹⁴C-Isotope mehr detektierbar. Der Kohlenstoff in Erdöl-basierenden Rohstoffen der Petrochemie, der mehrere Millionen Jahre alt ist, enthält daher keine ¹⁴C-Isotope mehr. Gleiches gilt für Erdgas- und Kohlebasierte Rohstoffe.

Ein weiterer Gegenstand der Erfindung ist somit ein Klebeband, das ein Trägermaterial und zumindest an einer seiner beiden Außenseiten, bevorzugt an beiden Außenseiten, eine erfindungsgemäße Haftklebmasse umfasst. Bevorzugt ist das Trägermaterial eine PET-Folie. Die PET-Folie weist bevorzugt eine Dicke von 1 bis 5 µm auf; die Schicht bzw. die Schichten der erfindungsgemäße Haftklebmasseweisen bevorzugt jeweils eine Schichtdicke von 20 bis 30 µm auf. Als bevorzugte Gesamtdicke des erfindungsgemäßen Klebebands ergeben sich somit 41 bis 65 µm.

Für die Verankerung der Haftklebmasse auf dem Träger oder auf einem anderen Substrat kann es von Vorteil sein, wenn die Masse und/oder das Substrat vor der Beschichtung mit Corona oder Plasma behandelt wird. Weiterhin kann es für die Verankerung der Haftklebmasseschicht auf weiteren Schichten, insbesondere auf einer Trägerschicht, von Vorteil sein, wenn eine chemische Verankerung, z. B. über einen Primer, erfolgt.

Ein weiterer Gegenstand der Erfindung ist die Verwendung einer erfindungsgemäßen Haftklebmasse bzw. eines erfindungsgemäßen Klebebands zur Herstellung von Verklebungen in elektronischen, optischen und/oder feinmechanischen Geräten.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)), einzuordnen sind; sofern es sich dabei um elektronische, optische oder feinmechanische Geräte handelt, weiterhin Uhren und Zeitmessgeräte gemäß Klasse 14 (NCL(10-2013)), wie insbesondere
wissenschaftliche, Schifffahrts-, Vermessungs-, fotografische, Film-, optische, Wäge-, Mess-, Signal-, Kontroll-, Rettungs- und Unterrichtsapparate und -instrumente;
Apparate und Instrumente zum Leiten, Schalten, Umwandeln, Speichern, Regeln und Kontrollieren von Elektrizität;
Bildaufzeichnungs-, -verarbeitungs-, -übertragungs- und -wiedergabegeräte, wie beispielweise Fernseher und dergleichen;
akustische Aufzeichnungs-, Verarbeitungs-, Übertragungs- und Wiedergabegeräte, wie beispielsweise Rundfunkgeräte und dergleichen;
Computer, Rechengeräte und Datenverarbeitungsgeräte, mathematische Geräte und Instrumente, Computerzubehör; Bürogeräte wie beispielsweise Drucker, Faxgeräte, Kopiergeräte, Schreibmaschinen; und Datenspeichergeräte;
Fernkommunikations- und Multifunktionsgeräte mit Fernkommunikationsfunktion wie beispielweise Telefone und Anrufbeantworter;
chemische und physikalische Messgeräte, Steuergeräte und Instrumente wie beispielweise Akkumulatorladegeräte, Multimeter, Lampen, Tachometer;
nautische Geräte und Instrumente;
optische Geräte und Instrumente;
medizinische Geräte und Instrumente und solche für Sportler;
Uhren und Chronometer;
Solarzellenmodule wie etwa elektrochemische Farbstoff-Solarzellen, organische Solarzellen, Dünnschichtzellen; und
Feuerlöschgeräte.

Im Mittelpunkt technischer Entwicklungen im Elektronikbereich stehen inzwischen vielfach Geräte, die immer kleiner und leichter gestaltet werden, damit sie von ihrem Besitzer jederzeit mitgeführt werden können. Dies geschieht üblicherweise durch Realisierung geringer Gewichte und/oder geeigneter Größe derartiger Geräte. Solche Geräte werden auch als Mobilgeräte oder portable Geräte bezeichnet. In diesem Kontext werden auch feinmechanische und optische Geräte zunehmend mit elektronischen Komponenten versehen, was die Möglichkeiten der Minimierung erhöht. Aufgrund des Mitführens der Mobilgeräte sind diese vermehrt mechanischen Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkeren Belastungen aufgrund von Feuchtigkeitseinwirkung, Temperatureinflüssen und dergleichen ausgesetzt als "immobile" Geräte, die üblicherweise in Innenräumen installiert sind und nicht oder kaum bewegt werden. Die erfindungsgemäße Haftklebmasse hat sich als besonders bevorzugt herausgestellt, solche Störeinflüsse zu überstehen und sie abzuschwächen oder zu kompensieren. Bevorzugt werden die erfindungsgemäße Haftklebmasse oder das erfindungsgemäße Klebeband daher zur Herstellung von Verklebungen in portablen elektronischen Geräten verwendet.

### Portable elektronische Geräte sind z.B.:

Fotoapparate, Digitalkameras; Fotografie-Zubehörgeräte wie Belichtungsmesser, Blitzlichtgeräte, Blenden, Fotogehäuse, Objektive; Filmkameras, Videokameras;
Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
Monitore, Displays, Bildschirme, berührungsempfindliche Bildschirme (Sensorbildschirme, "Touchscreen-Geräte"), Beamer;
Lesegeräte für elektronische Bücher ("E-Books");
Kleinfernsehgeräte, Taschenfernseher, Filmabspielgeräte, Videoabspielgeräte;
Radios (auch Klein- und Taschenrundfunkgeräte), Walkmen, Discmen, Musikabspielgeräte für z.B. CD, DVD, Blueray, Kassetten, USB, MP3; Kopfhörer;
schnurlose Telefone, Mobiltelefone, Smartphones, Funksprechgeräte, Freisprechgeräte, Personenrufgeräte (Pager, Pieper);
mobile Defibrilatoren, Blutzuckermessgeräte, Blutdruckmessgeräte, Schrittzähler, Pulsmesser;
Taschenlampen, Laserpointer;
mobile Detektoren, optische Vergrößerungsgeräte, Fernsichtgeräte, Nachtsichtgeräte;
GPS-Geräte, Navigationsgeräte, tragbare Schnittstellengeräte der Satellitenkommunikation;
Datenspeichergeräte (USB-Sticks, externe Festplatten, Speicherkarten); und
Armbanduhren, Digitaluhren, Taschenuhren, Kettenuhren sowie Stoppuhren.

### Mess- und Testmethoden:

### Statische Schälhaftung

Die Haftklebemasse wird auf einen 125µm Polyimidträger, zum Beispiel Kapton 500HN von DuPont^{™}, kaschiert. Ein 20 mm breiter Streifen des Klebebandmusters wurde auf Stahlplatten aufgebracht, die zuvor zweimal mit Aceton sowie einmal mit Isopropanol gewaschen wurden und danach 5 Minuten an der Luft liegen gelassen, damit das Lösungsmittel abdampfen kann. Der Haftklebestreifen wurde zehnmal mit einem Anpressdruck entsprechend einem Gewicht von 4 kg auf das Substrat aufgerollt und nach einer Aufziehzeit von zwei Tagen einer Schälbelastung ausgesetzt. Ein 100g-Gewicht wurde an das eine Klebebandende gehängt und der Klebeverbund kopfüber aufgehangen, sodass ein Abzugswinkel von 90° entsteht. Der Test wird bei 85 °C für 24h durchgeführt. Die abgeschälte Distanz wird anschließend in mm gemessen. Eine statische Schälhaftung von kleiner gleich 15 mm wird als gut bewertet.

### Bestimmung der Glasübergangstemperatur Tg der Haftklebmassen

Die statische Glasübergangstemperatur der Haftklebmassen wurde mittels Dynamischer Differenzkalorimetrie (DDK) bzw. - synonym - Dynamischer Scanning Kalorimetrie (DSC) bestimmt. Dazu wurden ca. 5 mg einer unbehandelten Probe der Haftklebmasse in ein Aluminiumtiegelchen (Volumen 25 µl) eingewogen und mit einem gelochten Deckel verschlossen. Zur Messung wurde ein DSC 204 F1 der Firma Netzsch verwendet. Es wurde zwecks Inertisierung unter Stickstoff gearbeitet. Die Probe wurde zunächst auf -150 °C abgekühlt, dann mit einer Heizrate von 10 K/min bis +150 °C aufgeheizt und erneut auf -150 °C abgekühlt. Die sich anschließende zweite Heizkurve wurde erneut bei 10 K/min gefahren und die Änderung der Wärmekapazität aufgenommen. Glasübergänge werden dabei als Stufen im Thermogramm (Wärmefluss-Temperatur-Diagramm) erkannt. Die Glasübergangstemperatur Tg wird folgendermaßen erhalten: Der jeweils linear verlaufende Bereich der Messkurve vor und nach der Stufe wird in Richtung steigender (Bereich vor der Stufe) bzw. fallender (Bereich nach der Stufe) Temperaturen verlängert. Im Bereich der Stufe wird eine Ausgleichsgerade parallel zur Ordinate so gelegt, dass sie die beiden Verlängerungslinien schneidet, und zwar so, dass zwei Flächen (zwischen der jeweils einen Verlängerungslinie, der Ausgleichsgeraden und der Messkurve) gleichen Inhalts entstehen. Der Schnittpunkt der so positionierten Ausgleichsgeraden mit der Messkurve ergibt die Glasübergangstemperatur.

### Bestimmung des Molekulargewichts

Die Angaben der zahlenmittleren Molmasse Mₙ und der gewichtsmittleren Molmasse M_{w} in dieser Schrift beziehen sich auf die an sich bekannte Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 5 µm, 10³ Å, 8,0 mm x 50 mm (Angaben hier und im Folgenden in der Reihenfolge: Typ, Partikelgröße, Porosität, Innendurchmesser x Länge; 1 Å = 10⁻¹⁰ m) verwendet. Zur Auftrennung wird eine Kombination der Säulen des Typs PSS-SDV, 5 µm, 10³ Å sowie 10⁵ Å und 10⁶ Å mit jeweils 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt.

### Bestimmung des K-Wert

Der K-Wert nach Fikentscher ist ein Maß für das Molekulargewicht und die Viskosität von Polymeren. Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1%-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

### Bestimmung des Tack

Bei diesem Test rollte eine Stahlkugel mit einem Gewicht von 5,6 g von einer 65 mm hohen Rampe (Neigungswinkel 21 °) auf einen waagerechten Streifen der zu prüfenden Klebmasse. Die Strecke bis zum Stillstand der Kugel wurde gemessen (Prüfklima 23 °C, 50 % relative Feuchte). Als gutes Ergebnis wird eine Strecke von maximal 300 mm angesehen.

Die Kugeln wurden vor der Messung mit Zellstoff und Aceton gereinigt und 30 min offen im Prüfklima konditioniert.

Die Klebmasse wurde vor der Messung 1 Tag im Prüfklima konditioniert.

### Bestimmung der Scherstandzeit

Die Bestimmung der Scherfestigkeit erfolgte bei einem Prüfklima von 23 +/-1 °C Temperatur und 50 % +/- 5 % rel. Luftfeuchte.

Die Prüfmuster wurden auf eine Breite von 13 ± 0,2 mm zugeschnitten und für mindestens 16 h im Klima gelagert. Für die Prüfung wurden 50 × 25 mm ASTM-Stahl Platten mit 2 mm Dicke und einer 20 mm Markierungslinie verwendet, die vor der Verklebung mehrfach intensiv mit Aceton gereinigt und danach 10 min trocknen gelassen wurden. Die Verklebungsfläche betrug 13 × 20 ± 0,2 mm. Der Prüfstreifen wurde unter Vermeidung von Lufteinschlüssen durch Überstreichen mit einem Anwischer in Längsrichtung mittig auf den Haftgrund aufgebracht, so dass die obere Kante des Prüfmusters genau an der 20 mm Markierungslinie anlag.

Die Rückseite des Prüfmusters wurde mit Aluminiumfolie abgeklebt. Das freie überstehende Ende wurde mit Papier abgeklebt. Sodann wurde der Klebestreifen 2-mal mit einer 2 kg Rolle hin und her überrollt. Nach dem Anrollen wurde eine Gurtschlaufe (Gewicht 5 - 7 g) am überstehenden Ende des Klebebandes angebracht.

Danach wurde mit Schraube und Mutter ein Adapterplättchen auf der Vorderseite der Schertestplatte befestigt. Um sicherzustellen, dass das Adapterplättchen fest auf der Platte sitzt, wurde die Schraube kräftig von Hand angezogen.

Die so vorbereitete Platte wurde über das Adapterplättchen mittels eines Hakens an einer Zähleruhr befestigt; in die Gurtschlaufe wurde dann ein 1-kg-Gewicht ruckfrei eingehängt.

Die Aufziehzeit zwischen Anrollen und Belastung betrug 12 min. Gemessen wurde die Zeit in Minuten bis zum Versagen der Verklebung, die Messergebnisse sind gemittelt aus drei Messungen. Als gutes Ergebnis wird eine Scherstandzeit von mindestens 8.000 min bewertet, als sehr gutes Ergebnis wird eine Scherstandzeit von mindestens 10.000 min bewertet.

Die Bestimmung der Scherstandzeit für andere Temperaturen erfolgt analog zu obigen Verfahren, wobei die vorbereite Platte vor Einhängen des 1-kg-Gewichts für 30 min unter den Testbedingungen, zum Beispiel bei 70 °C, equilibriert werden. Als gutes Ergebnis wird eine Scherstandzeit bei 70 °C von mindestens 100 min bewertet.

### Klebkraft Stahl

Die Bestimmung der Klebkraft erfolgte bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte (ASTM) geklebt. Die Stahlplatte wurde vor der Verklebung gereinigt und konditioniert. Dazu wurde die Platte zunächst mit Lösemittel abgewischt und danach 5 Minuten an der Luft liegen gelassen, damit das Lösungsmittel abdampfen konnte. Die dem Prüfuntergrund abgewandte Seite des Klebebandes wurde dann mit 25 µm dicker, geätzter PET-Folie abgedeckt, wodurch verhindert wurde, dass sich das Muster bei der Messung dehnt. Danach erfolgte das Anrollen des Prüfmusters auf den Untergrund. Hierzu wurde das Tape mit einer 4 kg - Rolle fünfmal hin und her mit einer Aufrollgeschwindigkeit von 10 m/min überrollt. 1 min nach dem Anrollen wurde die Platte in eine spezielle Halterung geschoben. Die Klebkraftmessung erfolgte mit einer Zwick-Zugprüfmaschine; die Muster wurden in einem Winkel von 180° mit einer Geschwindigkeit von 300 mm/min abgezogen. Die Messergebnisse sind in N/cm angegeben und sind gemittelt aus drei Einzelmessungen.

**Tabelle 1: Kommerziell erhältliche, eingesetzte Chemikalien**

| Chemische Verbindung | Handelsname | Hersteller | Cas-Nr. |
|---|---|---|---|
| Acrylsäure (AA) | | verschiedene Hersteller | 79-10-7 |
| 2-Octylat (2-OA) (Octylrest biobasiert) | | verschiedene Hersteller | 42928-85-8 |
| Isobornylacrylat (BA) | | verschiedene Hersteller | 5888-33-5 |
| 2-Ethylhexylacrylat (EHA) | | verschiedene Hersteller | 103-11-7 |
| i-Butylacrylat (iBA) (Butylrest biobasiert) | | verschiedene Hersteller | 106-63-8 |
| Methylacrylat (MA) | | verschiedene Hersteller | 96-33-3 |
| Aluminium(III)-acetylacetonat | Al-Chelat | verschiedene Hersteller | 13963-57-0 |
| Eisen(III)-acetylacetonat | Fe-Chelat | verschiedene Hersteller | 14024-18-1 |
| 2,2-Azobis(2-methylbutyronitril) | Vazo^{®} 67 | Akzo Nobel | 13475-08-7 |
| Bis-(4-tert-butylcyclo-hexyl)peroxydicarbonat | Perkadox^{®} 16 | Akzo Nobel | 15520-11-3 |
| Tetraglycidyl-metaxyloldiamin (Vernetzer) | ERISYS^{®} GA-240 | CVC | 63738-22-7 |
| Hydrierter Gylcerinester des Kolophoniums (Klebharz) | Foral^{®} 85 (Erweichungspunkt 69-77 °C, Ring & Ball) | Les Dérives Résiniques et Terpéniques (DRT) | 65997-13-9 |
| Hydrierter Gylcerinester des Kolophoniums (Klebharz) | Foral^{®} 105 (Erweichungspunkt 95-103 °C, Ring & Ball) | DRT | 64365-17-9 |
| Terpenphenolharz (Klebharz; TP 95) | Dertophene^{®} T (Erweichungspunkt 95 °C, Ring & Ball) | DRT | 73597-48-5 |
| Terpenphenolharz (Klebharz; TP 110) | Dertophene^{®} T 110 (Erweichungspunkt 110 °C, Ring & Ball) | DRT | 25359-84-6 |

### Herstellung der Polyacrylate und der Haftklebemassen:

### Polyacryat P-I

Ein für radikalische Polymerisationen konventionelles 3 L-Gefäß wurde mit 30 g Acrylsäure (AA), 650 g 2-Octylacrylat (2-OA), 220 g i-Butylacrylat (iBA) und 100 g Methylacrylat (MA) sowie 724 g Benzin/Aceton (70:30) befüllt. Nach 45minütiger Durchleitung von Stickstoffgas unter Rühren wurde der Reaktor auf 58 °C hochgeheizt und 0,5 g Vazo^{®} 67 hinzugegeben. Anschließend wurde die Manteltemperatur auf 75 °C eingestellt und die Reaktion konstant bei dieser Außentemperatur durchgeführt. Nach 1 h Reaktionszeit wurden wiederum 0,5 g Vazo^{®} 67 hinzugegeben. Nach 3 h wurde mit 200 g Benzin/Aceton (70:30) und nach 6 h mit 100 g Benzin/Aceton (70:30) verdünnt. Zur Reduktion der Restinitiatoren wurden nach 5,5 und nach 7 h jeweils 1,5 g Perkadox^{®} 16 hinzugegeben. Die Reaktion wurde nach 24 h Reaktionszeit abgebrochen und auf Raumtemperatur abgekühlt. Der K-Wert beträgt 82.

### Polyacryat P-II (Vergleichsbeispiel aus EP 3 417 005 B1)

Ein für radikalische Polymerisationen konventioneller 300 L-Reaktor wurde mit 2,0 kg Acrylsäure, 30,0 kg Isobornylacrylat (BA), 68,0 kg 2-Ethylhexylacrylat (EHA) sowie 72,4 kg Benzin/Aceton (70:30) befüllt. Nach 45minütiger Durchleitung von Stickstoffgas unter Rühren wurde der Reaktor auf 58 °C hochgeheizt und 50 g Vazo^{®} 67 hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo^{®} 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox^{®} 16 hinzugegeben. Die Reaktion wurde nach 24 h Reaktionszeit abgebrochen und auf Raumtemperatur abgekühlt. Molmassen mittels GPC: Mn = 62.800 g/mol; Mw = 852.600 g/mol. K-Wert: 62,5.

### Haftklebemassen

Die Polyacrylate wurden mit dem Klebharz und den Vernetzern laut Tabelle 2 abgemischt. Die so erhaltene Zusammensetzung wurde mittels eines Rakels aus Lösung auf eine silikonisierte Trennfolie (50 µm Polyester) beschichtet und anschließend getrocknet (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag nach Trocknung betrug 50 g/m².

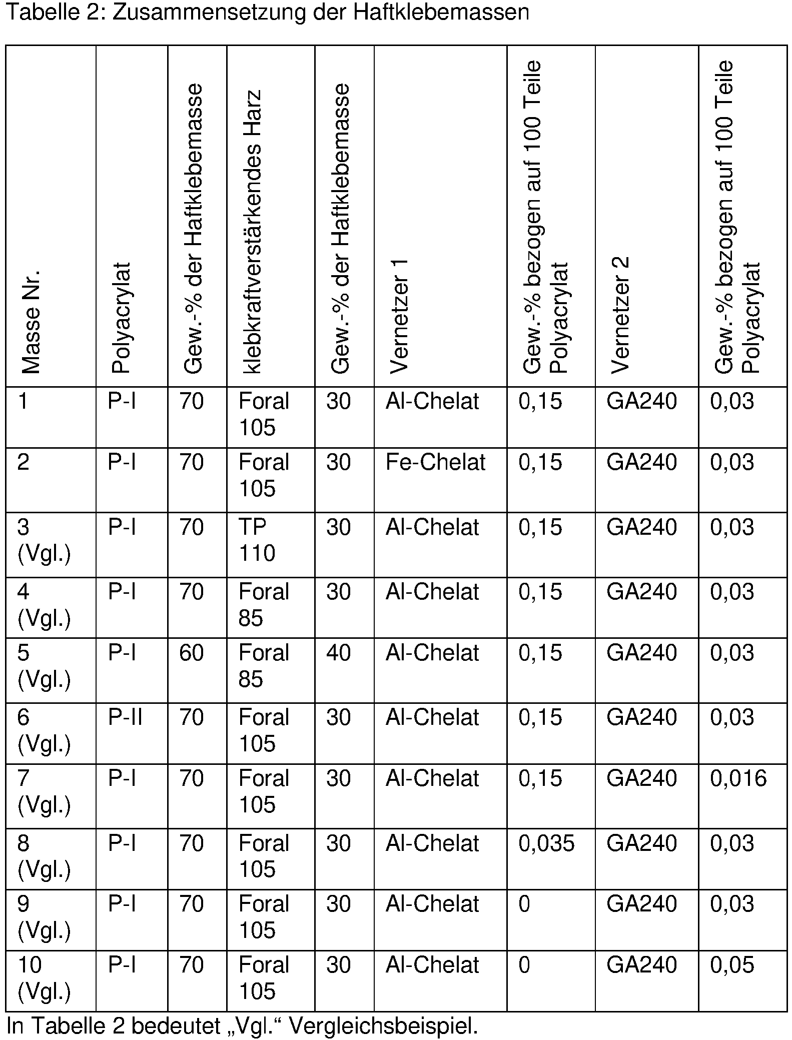

**Tabelle 3: Ergebnisse**

| Masse Nr. | Klebkraft / N/cm | SSZ bei 70 °C / min | SSZ bei RT / min | Schälhaftung / mm |
|---|---|---|---|---|
| 1 | 8 | + | ++ | + |
| 2 | 8 | + | + | + |
| 3 (Vgl.) | 9 | - | ++ | - |
| 4 (Vgl.) | 8 | - | - | - |
| 5 (Vgl.) | 11.5 | - | - | - |
| 6 (Vgl.) | 7.5 | - | + | - |
| 7 (Vgl.) | 8 | - | - | - |
| 8 (Vgl.) | 8 | - | - | - |
| 9 (Vgl.) | 8 | - | - | - |
| 10 (Vgl.) | 8 | + | + | - |

| | | | | |
|---|---|---|---|---|
| In Tabelle 3 bedeuten "++" sehr gut; "+" gut; "-" nicht gut"; "SSZ" Scherstandzeit. | | | | |

## Patentansprüche

1. Haftklebmasse, umfassend
- mindestens ein Copolymer A, das auf eine Monomerenzusammensetzung umfassend
a) ein oder mehrere Monomere ausgewählt aus der Gruppe bestehend aus i-Amylacrylat, n-Heptylacrylat, und 2-Octylacrylat zu insgesamt 45 bis 85 Gew.-%;
b) ein oder mehrere Alkyl(meth)acrylate, deren Alkoholkomponente 1 bis 4 C-Atome aufweist, zu insgesamt 24 bis 50 Gew.-% und
c) 0,5 bis 10 Gew.-% Acrylsäure;
zurückgeführt werden kann;
- mindestens ein Kolophoniumharz KH mit einer Erweichungstemperatur im Bereich von 80 bis 150 °C;
- mindestens einen koordinativen Vernetzer und
- mindestens einen kovalenten Vernetzer.

2. Haftklebmasse gemäß Anspruch 1, **dadurch gekennzeichnet, dass** die Erweichungstemperatur des Kolophoniumharzes KH im Bereich von 90 bis 110 °C ist.

3. Haftklebmasse gemäß einem der vorstehenden Ansprüche, **dadurch gekennzeichnet, dass** das molare Verhältnis von der Gesamtmenge an koordinativen Vernetzer zu der Gesamtmenge an kovalenten Vernetzer größer als 4,5; bevorzugt größer als 5,0 ist.

4. Haftklebmasse gemäß einem der vorstehenden Ansprüche, **dadurch gekennzeichnet, dass** koordinative Vernetzer in einer Gesamtmenge von 0,10 bis 0,30 Gewichtsteilen, bevorzugt 0,12 bis 0,23 Gewichtsteile, besonders bevorzugt 0,13 bis 0,17 Gewichtsteile, bezogen auf 100 Gewichtsteile der Gesamtheit der Copolymere A vorliegen.

5. Haftklebmasse gemäß einem der vorstehenden Ansprüche, **dadurch gekennzeichnet, dass** kovalente Vernetzer in einer Gesamtmenge von 0,02 bis 0,04 Gewichtsteilen, bevorzugt 0,025 bis 0,035 Gewichtsteile, bezogen auf 100 Gewichtsteile der Gesamtheit der Copolymere A vorliegen.

6. Haftklebemasse gemäß einem der vorstehenden Ansprüche, **dadurch gekennzeichnet, dass** Al(III)-, Fe(II)-, Fe(III)-, Zn(II), Zr(IV)- und/oder Ti(IV)-Chelatverbindungen als koordinative Vernetzer gewählt werden, insbesondere Al(III)-acetylacetonat oder Fe(III)-acetylacetonat.

7. Haftklebemasse gemäß einem der vorstehenden Ansprüche, **dadurch gekennzeichnet, dass** N,N,N',N'-Tetrakis(2,3-epoxypropyl)cyclohexane-1,3-dimethylamine, N,N,N',N'-tetrakis(2,3-epoxypropyl)-m-xylen-a,a'-diamin, 2,2-Bis(hydroxymethyl)-1,3-propanediol, (3,4-Epoxycyclohexan)methyl-3,4-epoxycyclohexylcarboxylat, Trimethylolpropantris(2-methyl-1-aziridinepropionate), Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat als kovalenter Vernetzer gewählt werden, insbesondere N,N,N',N'-tetrakis(2,3-epoxypropyl)-m-xylen-a,a'-diamin.

8. Haftklebmasse gemäß einem der vorstehenden Ansprüche, **dadurch gekennzeichnet, dass** die Monomerenzusammensetzung Monomere a) zu insgesamt 60 bis 75 Gew.-% umfasst.

9. Haftklebmasse gemäß einem der vorstehenden Ansprüche, **dadurch gekennzeichnet, dass** die Monomerenzusammensetzung als Monomer a) 2-Octylacrylat umfasst.

10. Haftklebmasse gemäß einem der vorstehenden Ansprüche, **dadurch gekennzeichnet, dass** die Monomerenzusammensetzung Monomere b) zu insgesamt 27 bis 37 Gew.-% umfasst.

11. Haftklebmasse gemäß einem der vorstehenden Ansprüche umfassend Copolymer A zu insgesamt 50 bis 90 Gew.-%, bevorzugt 65 bis 75 Gew.-% bezogen auf das Gesamtgewicht der Haftklebmasse.

12. Haftklebmasse gemäß einem der vorstehenden Ansprüche umfassend ein oder mehrere Kolophoniumharz KH zu insgesamt 20 bis 50 Gew.-%, bevorzugt 25 bis 35 Gew.-%, bezogen auf das Gesamtgewicht der Haftklebmasse.

13. Haftklebmasse gemäß einem der vorstehenden Ansprüche, **dadurch gekennzeichnet, dass** diese zu mindestens 50 Gew.-%, bevorzugt mindestens 60 Gew.-%, besonders bevorzugt mehr als 70 Gew.-% auf nachwachsenden Rohstoffen basiert.

14. Klebeband, umfassend ein Trägermaterial und zumindest an einer seiner beiden Außenseiten eine Haftklebmasse gemäß einem der Ansprüche 1 bis 13.

15. Verwendung einer Haftklebmasse gemäß einem der Ansprüche 1 bis 13 oder eines Klebebandes gemäß Anspruch 14 zur Herstellung von Verklebungen in elektronischen, optischen und/oder feinmechanischen Geräten.
